# EUROPÄISCHE PATENTSCHRIFT

(11) **EP 1 730 432 B1**
(45) Veröffentlichungstag und Bekanntmachung des Hinweises auf die Patenterteilung: **19.09.2007**
(21) Anmeldenummer: 05716159.8
(22) Anmeldetag: 17.03.2005
(51) Int. Cl.: F16K 31/00

(54) **FAIL-SAFE-SCHALTUNG FÜR GASVENTILE**
FAIL-SAFE CIRCUIT FOR GAS VALVES
CIRCUIT A SURETE INTEGREE POUR SOUPAPES A GAZ

(30) Priorität: 01.04.2004 DE 102004016764
(43) Veröffentlichungstag der Anmeldung: 13.12.2006
(73) Patentinhaber: Honeywell Technologies Sarl, 1024 Ecublens (CH)
(72) Erfinder: VEGTER, Derk, NL-7833 BH Nieuw Amsterdam (NL)
(74) Vertreter: Sturm, Christoph
(86) Internationale Anmeldenummer: PCT/EP2005/002855
(87) Internationale Veröffentlichungsnummer: WO 2005/098292

(56) Entgegenhaltungen:
- EP-A- 0 322 899
- DE-A1- 10 203 765
- US-A- 3 715 669
- US-A- 4 118 750

## Beschreibung

Die Erfindung betrifft eine Fail-Safe-Schaltung für Gasventile nach dem Oberbegriff des Anspruchs 1.

Regeleinrichtungen für Gasventile müssen ausfallsicher sein. Liegt ein undefinierter Zustand der Regeleinrichtung vor, so muss gewährleistet werden, dass sich in diesem undefinierten Zustand ein von der Regeleinrichtung angesteuertes Gasventil nicht öffnet. Wird z. B. ein Mikroprozessor als Regeleinrichtung für Gasventile verwendet, so wird durch Verwendung einer Fail-Safe-Schaltung gewährleistet, dass die gesamte Anordnung ausfallsicher ist.

Seit neuester Zeit kommen insbesondere in Niederspannungsanwendungen, wie z. B. in Wassererwärmem ohne Netzanschluss, piezobetriebene Gasventile zum Einsatz. Die piezobetriebenen Gasventile werden von einer als Mikroprozessor ausgebildeten Regeleinrichtung angesteuert. In solchen Niederspannungsanwendungen liegt die Versorgungsspannung bei ca. 3 Volt, die durch eine Batterie bereitgestellt werden kann. Zum Öffnen der piezobetriebenen Gasventile ist jedoch eine Spannung von mindestens 150 Volt erforderlich. Für derartige Niederspannungsanwendungen ist demnach eine Fail-Safe-Schaltung erforderlich, die einerseits aus einer geringen Versorgungsspannung von ca. 3 Volt eine Ausgangsspannung von mindestens 150 Volt zum Öffnen der piezobetriebenen Gasventile bereitstellt, und die andererseits nur dann die zum Öffnen der piezobetriebenen Gasventile erforderliche Ausgangsspannung erzeugt, wenn die als Mikroprozessor ausgebildete Regeleinrichtung sich in einem zum Öffnen der Gasventile definierten Zustand befindet.

Eine Fail-Safe-Schaltung mit den Merkmalen des Oberbegriffs des Anspruchs 1 ist aus der US 3,715,669 A bekannt. Hinsichtlich weiteren Standes der Technik sei verwiesen auf US 4,118,750 A.

Hiervon ausgehend liegt der vorliegenden Erfindung das Problem zu Grunde, eine neuartige Fail-Safe-Schaltung für Gasventile zu schaffen.

Dieses Problem wird durch eine Fail-Safe-Schaltung für Gasventile mit den Merkmalen des Anspruchs 1 gelöst. Erfindungsgemäß umfasst die Fail-Safe-Schaltung: a) eine Ladeschaltung, die mindestens einen Kondensator aufweist, wobei die Ladeschaltung bei Anliegen bzw. Vorliegen eines ersten Frequenzsignals im Eingangssignal den oder jeden Kondensator der Ladeschaltung auflädt, und wobei sich bei Anliegen bzw. Vorliegen eines zweiten Frequenzsignals im Eingangssignal, welches eine kleinere Frequenz als das erste Frequenzsignal aufweist, der oder jede Kondensator der Ladeschaltung entlädt; b) eine Spannungswandlerschaltung, die bei Anliegen bzw. Vorliegen des zweiten Frequenzsignals im Eingangssignal aus einer Versorgungsspannung eine zum Öffnen des Gasventils erforderliche Ausgangsspannung erzeugt, wobei die Spannungswandlerschaltung mindestens einen Kondensator aufweist, der sich bei Vorliegen des zweiten Frequenzsignals im Eingangssignal auflädt, wobei sich der oder jeder Kondensator der Spannungswandlerschaltung bei Vorliegen des ersten Frequenzsignals im Eingangssignal entlädt und so eine zum Öffnen des Gasventils erforderliche Ausgangsspannung bereitstellt, und wobei die Spannungswandlerschaltung einen Transistor aufweist, dessen Basis über einen Widerstand an einen Kondensator der Ladeschaltung angeschlossen ist, wobei der Transistor nur dann leitet, wenn sich der oder jeder Kondensator der Ladeschaltung bei Anliegen des zweiten Frequenzsignals im Eingangssignal entlädt.

Im Sinne der hier vorliegenden Erfindung wird eine Fail-Safe-Schaltung für Gasventile, insbesondere für piezobetriebene Gasventile geschaffen, die einerseits bei einer Versorgungsspannung von lediglich ca. 3 Volt eine zum Öffnen von piezobetriebenen Gasventilen erforderliche Ausgangsspannung von mehr als 150 Volt bereitstellen kann, und die andererseits nur dann diese zum Öffnen der piezobetriebenen Gasventile erforderliche Ausgangsspannung bereitstellt, wenn sich die Regeleinrichtung in einem zum Öffnen der Gasventile definierten Zustand befindet. Die erfindungsgemäße Fail-Safe-Schaltung zeichnet sich durch einen einfachen Aufbau aus und ist daher kostengünstig realisierbar.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:

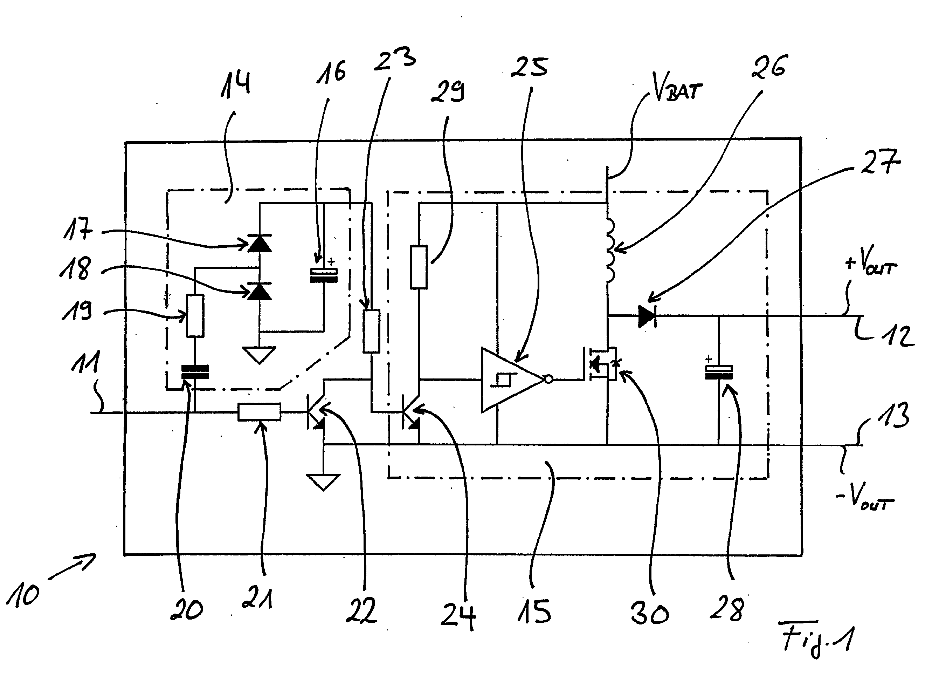

- Fig. 1:: ein Schaltbild einer erfindungsgemäßen Fail-Safe-Schaltung für Gasventile.

Nachfolgend wird die hier vorliegende Erfindung unter Bezugnahme auf Fig. 1 in größerem Detail beschrieben.

Fig. 1 zeigt eine erfindungsgemäße Fail-Safe-Schaltung 10 für Gasventile insbesondere in Niederspannungsanwendungen. Bei solchen Niederspannungsanwendungen, kann es sich z. B. um Wassererhitzer ohne Netzanschluss handeln, in den piezobetriebene Gasventile zum Einsatz kommen. In solchen Niederspannungsanwendungen wird eine Versorgungsspannung von einer Batterie oder von einem in einen Wasserkreislauf integrierten Generator bereitgestellt, wobei die Versorgungsspannung in solchen Anwendungen etwa 3 Volt beträgt. Die Versorgungsspannung ist in Fig. 1 mit V_{BAT} gekennzeichnet.

Die erfindungsgemäße Fail-Safe-Schaltung 10 verfügt im bevorzugten Ausführungsbeispiel der Figur 1 über einen Eingang, an welchen eine als Mikroprozessor ausgebildete Regeleinrichtung anschließbar ist, sowie über zwei Ausgänge 12 und 13, an welchen eine Versorgungsspannung +/- V_{OUT} für ein Gasventil ausgegeben wird. Die erfindungsgemäße Fail-Safe-Schaltung 10 der Fig. 1 erzeugt abhängig von dem am Eingang 11 derselben anliegenden Signal der Regeleinrichtung unter Verwendung der Versorgungsspannung V_{BAT}, die in etwa 3 Volt beträgt, die zum Öffnen des Gasventils erforderliche Ausgangsspannung V_{OUT}, und zwar nur dann, wenn am Eingang 11 der Fail-Safe-Schaltung 10 von der Regeleinrichtung ein mindestens zwei unterschiedliche, zeitlich aufeinanderfolgende Frequenzsignale aufweisendes Eingangssignal bereitgestellt wird.

Die erfindungsgemäße Fail-Safe-Schaltung 10 der Fig. 1 verfügt über eine Ladeschaltung 14 sowie eine Spannungswandlerschaltung 15. Die Ladeschaltung 14, sowie die Spannungswandlerschaltung 15 umfassen die in Fig. 1 durch strichpunktierte Linien umrahmten Bauelemente.

Die Ladeschaltung 14 der Fail-Safe-Schaltung 10 umfasst einen Kondensator 16, wobei parallel zum Kondensator 16 zwei Dioden 17 und 18 geschaltet sind. Zwischen den beiden Dioden 17 und 18 greift ein Widerstand 19 an, der unter Zwischenschaltung eines Kondensators 20 mit dem Eingang 11 der Fail-Safe-Schaltung 10 verbunden ist.

Wie Fig. 1 entnommen werden kann, greift am Eingang 11 der Fail-Safe-Schaltung 10 unter Zwischenschaltung eines Widerstandes 21 ein Transistor 22 an, wobei der Transistor 22 als bipolarer Transistor, nämlich als NPN-Transistor, ausgebildet ist. Die Basis des Transistors 22 ist über den Widerstand 21 an den Eingang 11 der Fail-Safe-Schaltung 10 angeschlossen. Am Kondensator 16 der Ladeschaltung 14 greift ein weiterer Widerstand 23 an, der weiterhin mit dem Kollektor des Transistors 22 und der Basis eines Transistors 24 der Spannungswandlerschaltung 15 verknüpft ist. Der Transistor 24 ist wiederum als bipolarer Transistor, nämlich als NPN-Transistor ausgebildet.

Die Emitter der beiden Transistoren 22 und 24 sind gemäß Fig. 1 miteinander verschaltet. Neben dem bereits erwähnten Transistor 24, dessen Basis einerseits mit dem Kollektor des Transistors 22 und andererseits über den Widerstand 23 mit dem Kondensator 16 der Ladeschaltung 14 verbunden ist, verfügt die Spannungswandlerschaltung 15 weiterhin über einen Komparator 25, eine Spule 26, eine Diode 27, einen Kondensator 28, einen Widerstand 29 sowie einen weiteren Transistor 30. Der Transistor 30 ist als Feldeffekttransistor bzw. MOSFET-Transistor ausgebildet.

Wie Fig. 1 entnommen werden kann, greift die Spule 26 einerseits an der Versorgungsspannung V_{BAT} und andererseits an der sogenannten Drain des als selbstsperrender Feldeffekttransistor ausgebildeten Transistors 30 an. Zwischen der Spule 26 und der Drain des MOSFET-Transistors 30 greift eine Anode der Diode 27 an, wohingegen die Kathode der Diode 27 mit dem Ausgang 12 verschaltet ist. Die Source des MOSFET-Transistors 30 ist mit dem Ausgang 13 verschaltet, wobei zwischen den Ausgängen 12 und 13 der Fail-Safe-Schaltung 10 der Kondensator 28 der Spannungswandlerschaltung 15 geschaltet ist. Wie Fig. 1 weiterhin entnommen werden kann, greift an dem Gate des MOSFET-Transistors 30 der Ausgang des Komparators 25 an, wobei der Eingang desselben mit dem Kollektor des bipolaren Transistors 25 verschaltet ist. Weiterhin ist der Kollektor des Transistors 24 über den Widerstand 29 mit der Spule 26 und damit der Versorgungsspannung V_{BAT} verschaltet.

Wie bereits erwähnt, erzeugt die Fail-Safe-Schaltung 10 nur dann an den Ausgängen 12, 13 eine zum Öffnen des Gasventils erforderliche Ausgangsspannung von über 150 Volt, wenn an dem Eingang 11 der Fail-Safe-Schaltung 10 von der Regeleinrichtung ein mindestens zwei unterschiedliche, zeitlich aufeinanderfolgende Frequenzsignale aufweisendes Signal bereitgestellt wird. In diesem Fall liegt ein zum Öffnen des Gasventils definierter Betriebszustand der Regeleinrichtung vor.

Im bevorzugten Ausführungsbeispiel umfasst das Eingangssignal zwei Frequenzsignale, nämlich ein erstes Frequenzsignal mit einer Frequenz von in etwa 500 kHz und ein zweites Frequenzsignal mit einer Frequenz von in etwa 10 kHz, die derart zeitlich hintereinanderfolgend in dem von der Regeleinrichtung bereitgestellten Signal vorliegen bzw. anliegen, dass jeweils nach einer Zeitspanne von in etwa 30 msek mit dem ersten Frequenzsignal von in etwa 500 kHz sich eine Zeitspanne von etwa 100 msek mit dem zweiten Frequenzsignal von in etwa 10 kHz anschließt.

Die erfindungsgemäße Fail-Safe-Schaltung 10 der Fig. 1 arbeitet nun derart, dass bei Anliegen bzw. Vorliegen des ersten Frequenzsignals von in etwa 500 kHz am Eingang 11 die Ladeschaltung 14 den Kondensator 16 derselben auflädt. Während des Anliegens des zweiten Frequenzsignals von in etwa 10 kHz am Eingang 11 wird der Kondensator 16 der Ladeschaltung nicht geladen, sondern vielmehr findet eine Entladung des Kondensators 16 über den Widerstand 23 und die Basis der Transistors 24 statt. Der Transistor 24 der Spannungswandlerschaltung 15 ist dann leitend, falls über die Entladung des Kondensators 16 ein Strom an dessen Basis fließt.

Während der Zeitspanne, zu der am Eingang 11 das erste Frequenzsignal von in etwa 500 kHz anliegt, kann aufgrund der hohen Verluste insbesondere in der Spule 26 und im MOSFET-Transistor 30 der Spannungswandlerschaltung 15 von derselben keine zum Öffnen des Gasventils erforderliche, hohe Ausgangsspannung erzeugt werden. Vielmehr wird diese Ausgangsspannung nur dann erzeugt, wenn am Eingang 11 das zweite Frequenzsignal mit einer Frequenz von in etwa 10 kHz anliegt. Bei Anliegen des zweiten Frequenzsignals von in etwa 10 kHz am Eingang 11 wird von der Spannungswandlerschaltung 15 aus der Versorgungsspannung V_{BAT} ein zum Öffnen des piezobetriebenen Gasventils erforderliche Ausgangsspannung V_{OUT} von mehr als 150 Volt erzeugt, und der Kondensator 28 der Spannungswandlerschaltung 15 wird geladen.

Folgt auf eine Zeitspanne von in etwa 100 msek, in welcher das zweite Frequenzsignal mit einer Frequenz von in etwa 10 kHz anliegt, eine Zeitspanne von in etwa 30 msek mit dem ersten Frequenzsignal mit einer Frequenz von in etwa 500 kHz, so entlädt sich der Kondensator 28 der Spannungswandlerschaltung 15 und hält die zum Öffnen des Gasventils erforderliche Ausgangsspannung von mehr als 150 Volt im Wesentlichen aufrecht. Der Kondensator 28 entlädt sich während der Zeitspanne, in welcher das erste Frequenzsignal mit der Frequenz von in etwa 500 kHz anliegt, über den hochohmigen Widerstand des Gasventils.

Die konkrete Auslegung der oben beschriebenen Schaltung obliegt dem hier angesprochenen Fachmann. Im besonders bevorzugten Ausführungsbeispiel, in welchem aus der Versorgungsspannung V_{BAT} von in etwa 3 Volt eine Ausgangsspannung V_{OUT} von in etwa 250 Volt zum Öffnen des Gasventils bereitgestellt werden soll, beträgt die Kapazität des Kondensators 28 vorzugsweise 1 µF, die Kapazität des Kondensators 16 beträgt in etwa 10 µF und die Kapazität des Kondensators 20 beträgt in etwa 220 pF. Als an den Ausgängen 12 und 13 anliegender Widerstand des Gasventils kann von 10 MΩ ausgegangen werden, der Widerstand 21 wird vorzugsweise mit 1 MΩ, der Widerstand 19 mit 1 kΩ und der Widerstand 29 mit 10 kΩ dimensioniert. Der Widerstand 23 verfügt vorzugsweise über 22 kΩ. Die Spule 26 verfügt vorzugsweise über eine Induktivität von 1 mH. Mit dieser Dimensionierung beträgt die Entladezeit des Kondensators 28 in etwa 10 sek, woraus unmittelbar folgt, dass auch während der Zeitspanne von 30 msek, in welcher das erste Frequenzsignal von in etwa 500 kHz am Eingang 11 anliegt, eine zum Öffnen des Gasventils erforderliche Ausgangsspannung an den Ausgängen 12 und 13 bereitgestellt werden kann.

### Bezugszeichenliste

- 10: Fail-Safe-Schaltung
- 11: Eingang
- 12: Ausgang
- 13: Ausgang
- 14: Ladeschaltung
- 15: Spannungswandlerschaltung
- 16: Kondensator
- 17: Diode
- 18: Diode
- 19: Widerstand
- 20: Kondensator
- 21: Widerstand
- 22: Transistor
- 23: Widerstand
- 24: Transistor
- 25: Komparator
- 26: Spule
- 27: Diode
- 28: Kondensator
- 29: Widerstand
- 30: Transistor

## Patentansprüche

1. Fail-Safe-Schaltung für Gasventile, insbesondere für piezobetriebene Gasventile, mit mindestens einem an eine Regeleinrichtung anschließbaren Eingang (11) und mindestens einem an ein Gasventil anschließbaren Ausgang (12, 13), wobei die Fail-Safe-Schaltung (10) nur dann an dem oder jedem Ausgang (12, 13) eine zum Öffnen eines Gasventils erforderliche Ausgangsspannung bereitstellt, wenn an einem Eingang (11) der Fail-Safe-Schaltung (10) von der Regeleinrichtung ein mindestens zwei unterschiedliche, zeitlich aufeinanderfolgende Frequenzsignale aufweisendes Eingangssignal bereitgestellt wird, mit a) einer Ladeschaltung (14), die mindestens einen Kondensator (16) aufweist, wobei die Ladeschaltung bei Anliegen bzw. Vorliegen eines ersten Frequenzsignals im Eingangssignal den oder jeden Kondensator (16) der Ladeschaltung auflädt, und wobei sich bei Anliegen bzw. Vorliegen eines zweiten Frequenzsignals im Eingangssignal, welches eine kleinere Frequenz als das erste Frequenzsignal aufweist, der oder jede Kondensator (16) der Ladeschaltung (14) entlädt; b) einer Spannungswandlerschaltung (15), die bei Anliegen bzw. Vorliegen des zweiten Frequenzsignals im Eingangssignal aus einer Versorgungsspannung (V_{BAT}) eine zum Öffnen des Gasventils erforderliche Ausgangsspannung (V_{OUT}) erzeugt, wobei die Spannungswandlerschaltung mindestens einen Kondensator (28) aufweist, der sich bei Vorliegen des zweiten Frequenzsignals im Eingangssignal auflädt, wobei sich der oder jeder Kondensator (28) der Spannungswandlerschaltung bei Vorliegen des ersten Frequenzsignals im Eingangssignal entlädt und so eine zum Öffnen des Gasventils erforderliche Ausgangsspannung (V_{OUT}) bereitstellt, **dadurch gekennzeichnet, dass** die Spannungswandlerschaltung (15) einen Transistor (24) aufweist, dessen Basis über einen Widerstand (23) an einen Kondensator (16) der Ladeschaltung (14) angeschlossen ist, wobei der Transistor (24) nur dann leitet, wenn sich der oder jeder Kondensator (16) der Ladeschaltung (14) bei Anliegen des zweiten Frequenzsignals im Eingangssignal entlädt.

2. Fail-Safe-Schaltung nach Anspruch 1, **dadurch gekennzeichnet, dass** die Ladeschaltung (14) den oder jeden Kondensator (16) derselben ausschließlich bei Vorliegen des ersten Frequenzsignals im Eingangssignal auflädt.

3. Fail-Safe-Schaltung nach Anspruch 1 oder 2, **dadurch gekennzeichnet, dass** die Ladeschaltung (14) bei Anliegen bzw. Vorliegen eines zweiten Frequenzsignals im Eingangssignal, wobei das zweite Frequenzsignal eine kleinere Frequenz aufweist als das erste Frequenzsignal, den oder jeden Kondensator (16) der Ladeschaltung (14) nicht auflädt.

4. Fail-Safe-Schaltung nach einem oder mehreren der Ansprüche 1 bis 3, **dadurch gekennzeichnet, dass** das erste Frequenzsignal eine Frequenz von in etwa 500 kHz und das zweite Frequenzsignal eine Frequenz von in etwa 10 kHz aufweist, und wobei die beiden Frequenzsignale derart zeitlich hintereinander im Eingangssignal anliegen, dass jeweils nach einer Zeitspanne von in etwa 30 ms mit dem ersten Frequenzsignal von in etwa 500 kHz sich eine Zeitspanne von in etwa 100 ms mit dem zweiten Frequenzsignal von in etwa 10 kHz anschließt.

## Claims

1. Fail-safe circuit for gas valves, in particular for piezo-operated gas valves, with at least one input (11) that can be connected to a regulator device and at least one output (12, 13) that can be connected to a gas valve, where the fail-safe circuit (10) only supplies an output voltage that is required to open a gas valve to the or to each output (12, 13) if an input signal containing at least two different, successive frequency signals is provided by the regulator device at an input (11) of the fail-safe circuit (10), having a charging circuit (14), which has at least one capacitor (16), where the charging circuit charges the or each capacitor (16) in the charging circuit when a first frequency signal is applied or is present in the input signal, and where the or each capacitor (16) in the charging circuit (14) discharges when a second frequency signal is applied or is present in the input signal, the second frequency signal having a lower frequency than the first frequency signal, b) a voltage transformer circuit (15), which produces an output voltage (V_{OUT}) that is required to open the gas valve from a supply voltage (V_{BAT}) when the second frequency signal is applied or is present in the input signal, where the voltage transformer circuit has at least one capacitor (28), which charges when the second frequency signal is present in the input signal, where the or each capacitor (28) of the voltage transformer circuit discharges when the first frequency signal is present in the input signal, and hence provides an output voltage (V_{OUT}) that is required to open the gas valve, **characterized in that** the voltage transformer circuit (15) has a transistor (24), the base of which is connected via a resistor (23) to a capacitor (16) of the charging circuit (14), where the transistor (24) only conducts if the or each capacitor (16) of the charging circuit (14) discharges when the second frequency signal is applied in the input signal.

2. Fail-safe circuit according to Claim 1, **characterized in that** the charging circuit (14) charges the or each capacitor (16) of the same only when the first frequency signal is present in the input signal.

3. Fail-safe circuit according to Claim 1 or 2, **characterized in that** the charging circuit (14) does not charge the or each capacitor (16) in the charging circuit (14) when a second frequency signal is applied or is present in the input signal, the second frequency signal having a lower frequency than the first frequency signal.

4. Fail-safe circuit according to one or more of Claims 1 to 3, **characterized in that** the first frequency signal has a frequency of about 500 kHz and the second frequency signal has a frequency of about 10 kHz, and where the two frequency signals are applied successively in the input signal in such a way that a time period of about 30 milliseconds with the first frequency signal of about 500 kHz is respectively followed by a time period of about 100 milliseconds with the second frequency signal of about 10 kHz.

## Revendications

1. Circuit à sûreté intégrée pour soupapes à gaz, en particulier pour soupapes à gaz actionnées piézoélectriquement, lequel circuit présente au moins une entrée (11) qui peut être raccordée à un dispositif de régulation et au moins une sortie (12, 13) qui peut être raccordée à une soupape à gaz, le circuit (10) à sûreté intégrée n'appliquant sur la ou les sorties (12, 13) la tension de sortie nécessaire pour l'ouverture de la soupape à gaz que si un signal d'entrée qui présente au moins deux signaux successifs de fréquences différentes est appliqué par le dispositif de régulation sur l'entrée (11) du circuit (10) à sûreté intégrée, ainsi qu'un circuit de charge (14) qui présente au moins un condensateur (16), tandis que le circuit de charge charge le ou les condensateurs (16) du circuit de charge lorsqu'un signal d'une première fréquence est appliqué ou est présent dans le signal d'entrée et en cas d'application ou de présence dans le signal d'entrée d'un deuxième signal de fréquence dont la fréquence est plus petite que la fréquence du premier signal, décharge le ou les condensateurs (16) du circuit de charge (14); b) un circuit (15) de conversion de tension qui, en cas d'application ou de présence du signal à la deuxième fréquence dans le signal d'entrée, forme à partir d'une tension d'alimentation (V_{BAT}) la tension de sortie (V_{OUT}) nécessaire pour l'ouverture de la soupape à gaz, le circuit de conversion de fréquence présentant au moins un condensateur (28) qui se charge lorsque le signal à la deuxième fréquence est présent dans le signal d'entrée, le ou les condensateurs (28) du circuit de conversion de tension se déchargeant en cas de présence du signal à la première fréquence dans le signal d'entrée et délivrant ainsi la tension de sortie (V_{OUT}) nécessaire pour l'ouverture de la soupape à gaz, **caractérisé en ce que** le circuit (15) de conversion de tension présente un transistor (24) dont la base est raccordée par l'intermédiaire d'une résistance (23) à un condensateur (16) du circuit de charge (14), le transistor (24) ne conduisant le courant que si le ou les condensateurs (16) du circuit de charge (14) se déchargent lorsque le signal à la deuxième fréquence est appliqué dans le signal d'entrée.

2. Circuit à sûreté intégrée selon la revendication 1, **caractérisé en ce que** le circuit de charge (14) charge son ou ses condensateurs (16) uniquement lorsque le premier signal de fréquence est présent dans le signal d'entrée.

3. Circuit à sûreté intégrée selon les revendications 1 ou 2, **caractérisé en ce que** lorsqu'un signal à une deuxième fréquence est appliqué ou présent dans le signal d'entrée, le signal à la deuxième fréquence présentant une fréquence plus petite que le signal à la première fréquence, le circuit de charge (14) ne charge pas le ou les condensateurs (16) du circuit de charge (14).

4. Circuit à sûreté intégrée selon l'une ou plusieurs des revendications 1 à 3, **caractérisé en ce que** le signal à la première fréquence présente une fréquence d'environ 500 kHz et le signal à la deuxième fréquence une fréquence d'environ 10 kHz, les deux signaux de fréquence étant appliqués successivement dans le signal d'entrée de telle sorte qu'une durée d'environ 100 ms avec le signal à la deuxième fréquence d'environ 10 kHz suit une durée d'environ 30 ms avec le signal à la première fréquence d'environ 500 kHz.
